# EUROPEAN PATENT SPECIFICATION

(11) **EP 1 239 631 B1**
(45) Date of publication and mention of the grant of the patent: **14.09.2005**
(21) Application number: 02005120.7
(22) Date of filing: 07.03.2002
(51) Int. Cl.: H04L 12/28

(54) **Wireless LAN system and method for seamless communications of a mobile terminal**
Drahtloses lokales Netzwerk und Verfahren für unterbrechungsfreie Kommunikation eines mobilen Endgerätes
Réseau local sans fil et procédé pour communications continues d'un terminal mobile

(30) Priority: 09.03.2001 JP 2001066947
(43) Date of publication of application: 11.09.2002
(73) Proprietor: NEC CORPORATION, Tokyo (JP)
(72) Inventor: Ueno, Tsukasa, Tokyo (JP)
(74) Representative: Glawe, Delfs, Moll

(56) References cited:
- EP-A- 0 918 417
- WO-A-00/59252
- WO-A-00/76170
- ALBRECHT M ET AL: "IP services over Bluetooth: leading the way to a new mobility" LOCAL COMPUTER NETWORKS, 1999. LCN '99. CONFERENCE ON LOWELL, MA, USA 18-20 OCT. 1999, LOS ALAMITOS, CA, USA,IEEE COMPUT. SOC, US, 18 October 1999 (1999-10-18), pages 2-11, XP010358529 ISBN: 0-7695-0309-8

## Description

The present invention relates to a wireless LAN system and a method for the same, wherein a mobile terminal is wirelessly connected to a network so that communications are conducted. Particularly, the present invention relates to a wireless LAN system and a method for the same, wherein communications can be seamlessly maintained while a mobile terminal is moving between the wireless cells of respective base stations connected to a network.

In the wireless LAN system that allows a mobile terminal to be connected wirelessly to a communication network while the mobile terminal is freely moving, an agent on the communications network manages the location of a mobile terminal. To manage the location of a mobile terminal, an agent has to register the location of the mobile terminal.

There are two methods to catalog locations on an agent. That is, one is the method in which a mobile terminal receives the frame of an agent advertisement periodically sent from an agent to catalog the location thereof. The other is the method in which a mobile terminal itself detects an agent to catalog the location thereof.

Generally, in comparison with the latter, the former can more shorten the time period until a mobile terminal establishes communications with the network.

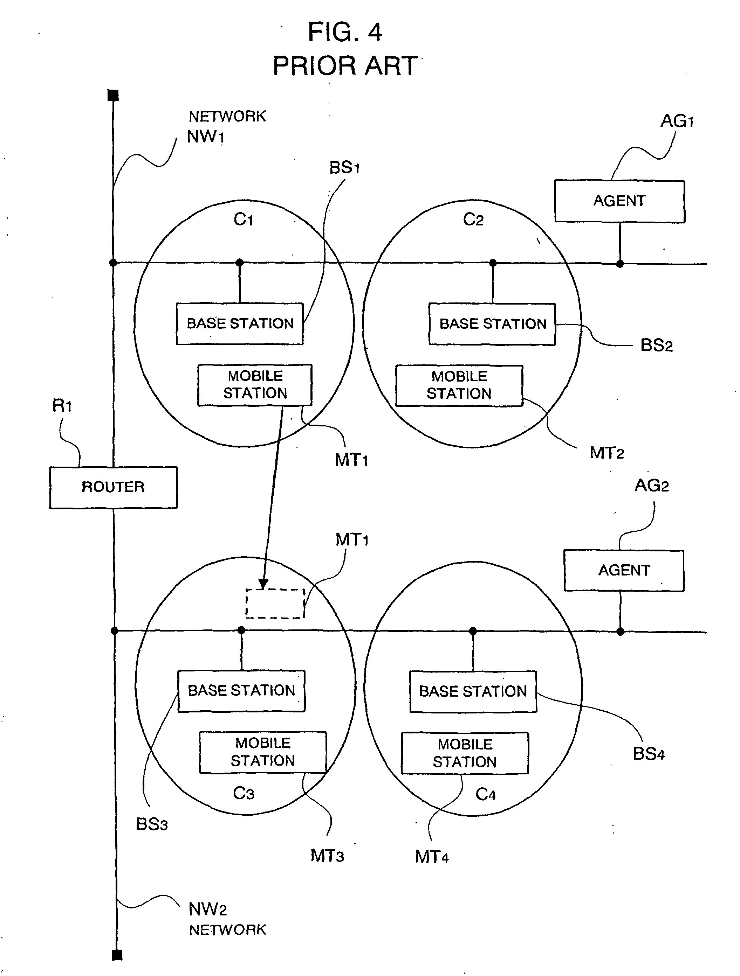

Fig. 4 is a block diagram illustrating the configuration of a wireless LAN system applied when an agent periodically sends an agent advertisement. Referring to Fig. 4, the wireless LAN system includes a router R₁, networks NW₁ and NW₂, base stations BS₁ to BS₄, agents AD₁ and AG₂, and mobile terminals MT₁ to MT₄. Each of the networks NW₁ and NW₂ is, for example, Ethernet. The router R₁ connects the network NW₁ and the network NW₂.

The base stations BS₁ and BS₂ are in the network NW₁. The base stations BS₃ and BS₄ are in the network NW₂. The radio cells C₁ to C₄ belong to the base terminals BS₁ to BS₄, respectively. When the mobile terminal MT₁, MT₂, MT₃, or MT₄ is within any one of the radio cells C₁ to C₄, respectively belonging to the base stations BS₁ to BS₄, it is connected to the base station in the corresponding radio cell. Thus the corresponding mobile terminal conducts IP (Internet Protocol) communications via the corresponding base station. As shown in Fig. 4, when being within the radio area C₁ of the base station BS₁, the mobile terminal MT₁ is linked to the base station BS₁, thus conducting communications via the base station BS₁.

The agent AG₁ belongs to the network NW₁ while the agent AG₂ belongs to the network NW₂. In order to perform the IP mobility support or location management of a mobile terminal connected to the base station BS₁, BS₂ in the corresponding network, the agent AG₁ periodically sends an agent advertisement frame to all the base stations BS₁ and BS₂ connected to the network NW₁. In order to perform the IP mobility support or location management of a mobile terminal connected to the base station BS₃, BS₄ in the corresponding network, the agent AG₂ periodically sends an agent advertisement frame to all the base stations BS₃ and BS₄ connected to the network NW₂. Each of the base stations BS₁, BS₂, BS₃, and BS₄ sends an agent advertisement frame within its radio area.

When moving from the radio area C₁ of the base station BS₁ to the radio area C₃ of the base station BS₃, the mobile terminal MT₁ detects its movement because communications to the base station BS₁ are interrupted. Subsequently, the mobile terminal MT₁ newly performs a belonging sequence process to the base station BS₃ and then waits for an agent advertisement issued from the base station BS₃. When receiving the agent advertisement, the mobile terminal MT₁ changes the setting of the internal network and notifies the agent AG₁ of the movement. When receiving the notice of the movement, the agent AG₁ registers the mobile terminal MT₁ to manage the location of the mobile terminal MT₁.

Recently, it has been required that the wireless LAN system quickly can switch from a base station to another base station in accordance with movement of a mobile terminal to more shorten the instantaneous disconnection of communications. The various technologies to solve the above-mentioned demand are disclosed in JP-A No. 56473/1998, JP-A No. 56475/1998, JP-A No. 92562/2000, and Japanese Patent No. 3001490. In order to switch over from a base station to another base station in accordance with movement of a mobile terminal, the mobile terminal first receives an agent advertisement periodically transmitted from an agent. Next, after the mobile terminal transmits a movement notice to the agent, the agent registers the mobile terminal based on the movement notice. To shorten the base station switching time, the time period required for the above-mentioned process has to be reduced. However, the problem is that even if the above-mentioned technologies are combined together, the processing time cannot be shortened.

As described above, to shorten disconnection of communications more quickly, it is required that the conventional wireless LAN system quickly changes a base station to another base station in accordance with movement of a mobile station. However, because the method has not been proposed of shortening the time required to enter a mobile terminal in an agent, the problem is that the base station switching time cannot be shortened.

Methods as mentioned above are for instance utilized in systems disclosed in WO-0076170-A, EP-A-0 918 417, WO-0059252-A and in an article "IP Services over Blue-tooth: Leading the Way to a New Mobility" by M. Albrecht et al., Local Computer Networks, 1999, LCN '99, Conference on Lowell, MA USA Oct., 1999, Los Alamitos, CA, USA, IEEE COMPUT. SOC, US; pages 2 - 11.

An object of the present invention is to provide a wireless LAN system and a wireless LAN system control method, that can shorten the time period during which a base station is switched to another base station.

This object is achieved by a wireless LAN system according to claim 1 and by a method according to claim 8; the dependent claims are related to further developments of the invention.

In the wireless LAN system according to the present invention, a wireless base station stores an agent advertisement transmitted from an agent. Thus, when a mobile terminal tries to establish connection, the wireless base station can immediately transmit the agent advertisement. For that reason, the wireless LAN system does not require that a mobile terminal stands by until an agent transmits an agent advertisement. Therefore according to the present invention, the wireless LAN system can shorten the time period required to enter the location of a mobile terminal in an agent, that is, the wireless-base-station changeover time.

This and other objects, features and advantages of the present invention will become more apparent upon a reading of the following detailed description and drawings, in which:
Fig. 1 is a block diagram illustrating the configuration of a wireless LAN system according to an embodiment of the present invention;
Fig. 2 is a block diagram illustrating the configuration of a base station in a wireless LAN system according to an embodiment of the present invention;
Fig. 3 is a block diagram illustrating the configuration of a wireless terminal in a wireless LAN system according to an embodiment of the present invention and
Fig. 4 is a block diagram illustrating the configuration of a conventional wireless LAN system.

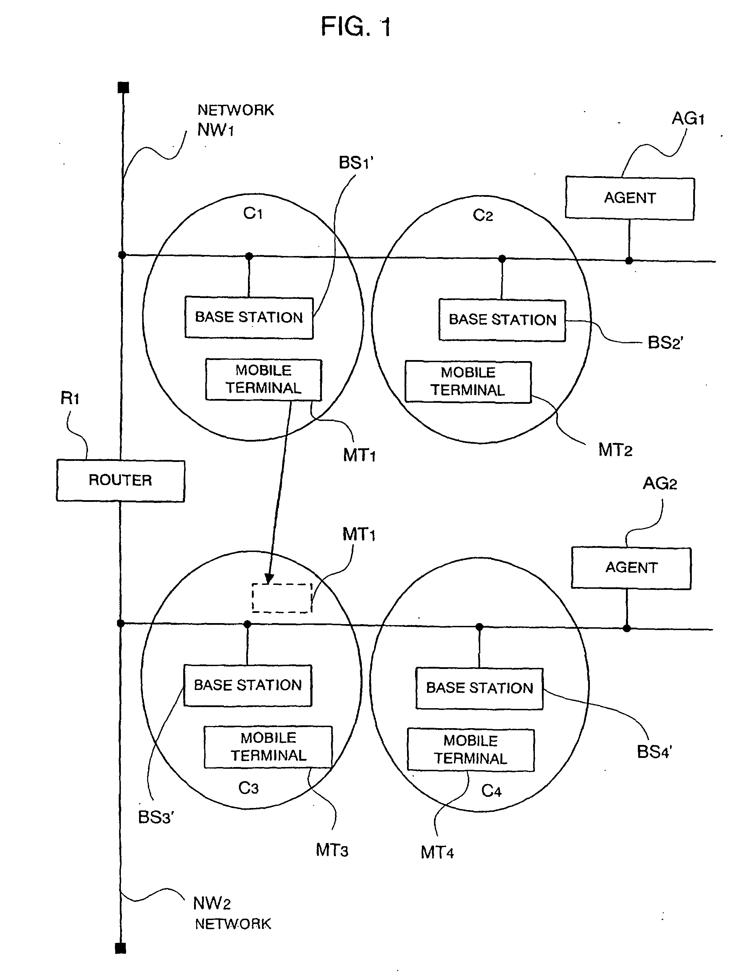

A wireless LAN system and the control method thereof, according to the present invention, will be described below in detail by referring to the attached drawings. Fig. 1 is a block diagram illustrating the configuration of a wireless LAN system according to an embodiment. Referring to Fig. 1, the wireless LAN system differs from the conventional wireless LAN system shown in Fig. 4 in that base stations BS₁' to BS₄' are included in place of the base stations BS₁ to BS₄.

Each of the base stations BS₁' and BS₂' always monitors an agent advertisement frame periodically sent onto the network NW₁ from agent AG₁. Each of the base stations BS₃' and BS₄' always monitors an agent advertisement frame periodically sent onto the network NW₂ from agent AG₂. Each of the base stations BS₁' to BS₄' receives and stores the frame.

Each of the base stations BS₁' to BS₄' receives a belonging request from a mobile terminal newly entered into the radio cell thereof. When belonging is allowable, the base station notifies the mobile terminal of permission for belonging while it transmits a stored agent advertisement frame to the mobile terminal.

As shown in Fig. 1, when the mobile terminal MT₁ moves from the radio area C₁' of the base station BS₁' to the radio area C₃' of the base station BS₃', the mobile terminal MT₁' newly transmits a belonging request to the base station BS₃'. Meanwhile, the mobile terminal MT₁' waits for reception of an agent advertisement frame. Because an agent advertisement transmitted from the agent has been already stored, the base station BS₃' transmits the agent advertisement to the mobile terminal MT₁.

In a manner similar to that in the prior art, the mobile terminal MT₁ changes the network setting of the agent AG₂ based on the agent advertisement transmitted from the base station BS₃' and transmits a movement notice for the agent AG₂ to the base station BS₃'.

As described above, in the wireless LAN system of the present embodiment, each of the base stations BS₁' to BS₄' stores agent advertisements transmitted from the agents AG₁ and AG₂. Thus, when the mobile terminal MT₁, M₂, M₃, MT₄ tries to establish connection, the base station can immediately transmit the agent advertisement. For that reason, in the wireless LAN system, it is not required that the mobile terminal MT₁, MT₂, MT₃, MT₄ waits until the agent AG₁, AG₂ transmits an agent advertisement. As a result, the time period required to catalog the mobile terminal MT₁, MT₂, MT₃, MT₄ in the agent AG₁, AG₂ can be shortened. The wireless LAN system can shorten the time period during which base stations BS₁' to BS₄' are switched over, thus shortening instantaneous disconnection of communications.

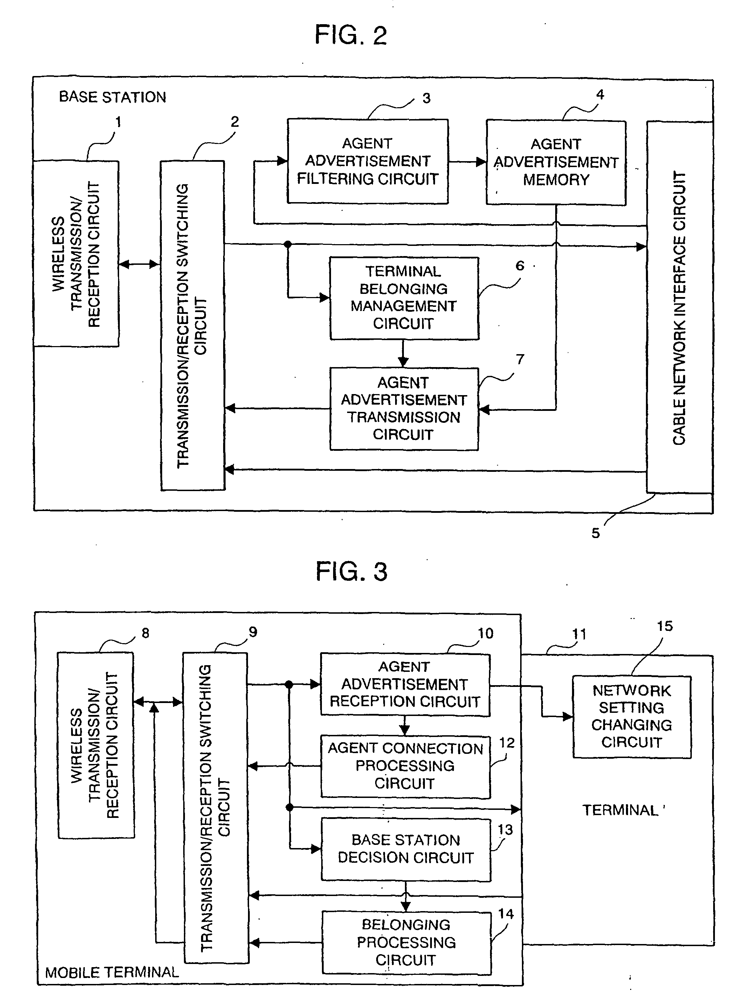

Fig. 2 is a block diagram illustrating the configuration of a base station BS₁', BS₂', BS₃', BS₄' in a wireless LAN system of the present embodiment. Referring to Fig. 2, each of the base stations BS₁' to BS₄' includes a wireless transmission/reception circuit 1, a transmission/reception switching circuit 2, an agent advertisement filtering circuit 3, an agent advertisement memory 4, a cable network interface circuit 5, a terminal belonging management circuit 6, and an agent advertisement transmission circuit 7. A bi-directional transmission/reception line, which is used in communications between a mobile terminal and a communication destination, is inserted between the transmission switching circuit 2 and the cable network interface circuit 5.

The base station BS₁', BS₂', BS₃', BS₄' is linked to a network via the cable network interface circuit 5. The cable network interface circuit 5 monitors an agent advertisement frame periodically sent from an agent and then outputs a received agent advertisement to the agent advertisement memory 4 via the agent advertisement filtering circuit 3. The agent advertisement filtering circuit 3 filters signals on the network and extracts an agent advertisement frame. The agent advertisement memory 4 stores the agent advertisement extracted by the agent filtering circuit 3.

The wireless transmission/reception circuit 1 is an interface circuit that connects a mobile terminal to a base station wireless. The transmission/reception switching circuit 2 switches over between wireless transmission and wireless reception. A base station implements wireless transmission/reception to a mobile terminal, using the wireless transmission/reception circuit 1 and the transmission/reception switching circuit 2. For example, the CSMA/CA scheme is used as the wireless communications scheme of the wireless station.

The terminal belonging management circuit 6 detects that a belonging request is transmitted from a mobile terminal. When detecting that a belonging process is performed to a mobile terminal, the terminal belonging management circuit 6 notifies the agent advertisement transmission circuit 7 of the detection. In response to the notice, the agent advertisement transmission circuit 7 reads out an agent advertisement from the agent advertisement memory 4 and transmits the agent advertisement to the mobile terminal via the wireless transmission/reception circuit 1 and via the transmission/reception switching circuit 2.

Fig. 3 is a block diagram illustrating the configuration of a mobile terminal in a wireless LAN system according to an embodiment. Referring to Fig. 3, a mobile terminal includes a wireless transmission/reception circuit 8, a transmission/reception switching circuit 9, an agent advertisement reception circuit 10, an agent connection processing circuit 12, a base station decision circuit 13, and a belonging processing circuit 14. The terminal 11, which is, for example, a notebook-size personal computer to be connected to a mobile terminal, has a network setting changing circuit 15. A bi-directional transmission/reception circuit used when the terminal 11 communicates with a communication destination on a network is inserted between the transmission/reception switching circuit 9 and the terminal 11.

The wireless transmission/reception circuit 8 is an interface circuit that connects a mobile terminal to a base station wireless. The transmission/reception switching circuit 9 switches over between wireless transmission and wireless reception by wireless transmission/reception circuit 8. A mobile terminal conducts wireless transmission/reception between the mobile terminal and a base station, using the wireless transmission/reception circuit 8 and the transmission/reception switching circuit 9. As the wireless LAN communications scheme of the base station, there is, for example, the CSMA/CA scheme.

The base station decision circuit 13 detects signals (e.g. beacon) periodically transmitted from a base. If signals are not detected, the base station decision circuit 13 judges that the self station has moved out from the radio cell of the base station. Moreover, when detecting signals periodically transmitted from other base station are received, the base station decision circuit 13 notifies the belonging processing circuit 14 of the detection. When receiving the notice, the belonging processing circuit 14 transmits a belonging request signal to the base station via the wireless transmission/reception circuit 8 and via the transmission/reception switching circuit 9.

The agent advertisement reception circuit 10 detects reception of an agent advertisement. When detecting reception of an agent advertisement, the agent advertisement reception circuit 10 notifies the agent connection processing circuit 12 of the detection. Meanwhile, the agent advertisement reception circuit 10 outputs a request to the network setting changing circuit 15 to change the network setting of the terminal 11 based on the agent advertisement information. When receiving the notice saying that reception of an agent advertisement has been detected, the agent connection processing circuit 12 transmits a movement notice for an agent to the base station via the wireless transmission/reception circuit 8 and via the transmission/reception switching circuit 9.

When receiving a request for changing the network setting, the network setting changing circuit 15 in the terminal 11 changes the network setting of the terminal 11 in accordance with the request. For example, in the mobile terminal, when each of the networks NW₁ and NW₂ shown in Fig. 1 is a communications network conducting communications with the TCP/IP, an agent advertisement transmitted by each agent stores the IP address of an agent. As shown in Fig. 1, when a mobile terminal is handed over from the base station BS₁' to the base station BS₃' or is connected to a base station in a different network, the agent advertisement reception circuit 10 notifies the network setting changing circuit 15 of the IP address of an agent contained in the agent advertisement, together with a network setting changing request. The network setting changing circuit 15 changes the IP address notified of the setting of the IP address of an agent.

In the mobile terminal in the wireless LAN system of the present embodiment, when a standard mobile IP is supported in the TCP/IP module of the terminal 11, the agent advertisement reception circuit 10 and the agent connection processing circuit 12 are disposed as described above. In such a configuration, the current agent can be quickly grasped without changing the mobile IP process. When the terminal 11 has the function of the agent advertisement reception circuit 10 and the function of the agent connection processing circuit 12, it is not required to prepare the agent advertisement reception circuit 10 and the agent connection processing circuit 12 in the mobile terminal.

In the wireless LAN system of the present embodiment, the base station BS₁' transmits an agent advertisement itself to a mobile terminal. However, the present should not be limited only to the wireless LAN system of the embodiment. The base station may transmit to a mobile terminal only valuable information such as the IP address of an agent of information contained in an agent advertisement. In such a case, the traffic volume between the base station and the mobile terminal is more decreased so that the radio band can be utilized effectively.

The base stations are completely stationary. When grasping the installation place, a network administrator may set the IP address of an agent in the network to the base station, using SNMP (Simple Network Management Protocol). SNMP means a network management protocol in the TCP/IP. In such a configuration, the radio band between a base station and a wireless station can be effectively utilized. Because the agent advertisement filtering circuit 3 is reduced in the configuration of the base station in Fig. 2, the configuration of the base station can be more simplified.

As described above, the wireless LAN system and the method thereof according to the present invention have the following advantages.
1. A wireless base station stores an agent advertisement transmitted from an agent. Thus, when a mobile terminal tries to establish connection, the wireless base station can immediately transmit the agent advertisement. This does not require that the mobile station waits for the agent advertisement transmitted from the agent for a long time. Therefore, the wireless LAN system can shorten the time required to catalog an agent advertisement in the agent, that is, the wireless station changeover time, thus decreasing the communication disconnection time.
2. A base station is not required to periodically originate an agent advertisement to radio cells. This enables to lessen the traffic volume between a base station and a wireless station. Thus, the wireless band can be effectively utilized.
3. When a standard mobile IP is supported in the TCP/IP module, a mobile terminal includes, for example, an agent advertisement reception circuit and an agent connection processing circuit. Thus, the current agent can be quickly grasped without changing the mobile IP process.

## Claims

1. A wireless LAN system comprising:
a plurality of communication networks (NW₁, NW₂) connected to each other;
base stations (BS') for periodically transmitting signals within a wireless cell, at least one of said base stations being disposed in each of said networks (NW);
a mobile terminal for communication with a base station in a cell;
said mobile terminal (MT) transmitting, when newly receiving said signals from a base station in another cell, a registration request to the base station (BS') which has transmitted said signal and connecting, when receiving permission for registration from said base station (BS'), said mobile terminal (MT) to said base station, thus conducting communication; and
agents (AG) each for distributing an agent advertisement onto said communication networks and managing, after said mobile terminal receives an agent information, the location of said mobile terminal based on movement information transmitted from said mobile terminal (MT), each of agents being disposed in each of said communications networks;
**characterized in that**
each of said base stations is adapted to store an agent information based on said agent advertisement distributed on said communication network, to receive a registration request from said mobile terminal, and to transmit, when registration of said mobile terminal is permitted, said agent information to said mobile terminal to be stored, together with said permission for registration.

2. The system defined in Claim 1, wherein said agent information comprises said agent advertisement.

3. The system defined in Claim 2, wherein each base station comprises:
an agent advertisement filtering circuit (3) for filtering signals on said communication networks and then extracting said agent advertisement;
an agent advertisement memory (4) for storing an agent advertisement output from said agent advertisement filtering circuit (3);
a cable network interface circuit (5) for monitoring signals distributed on said communication networks and outputting said signals on said communication networks into said agent advertisement filtering circuit;
a transmission/reception circuit (1) as an interface circuit that is adapted to wirelessly connect said base station to said mobile terminal;
a transmission/reception switching circuit (2) for changing said transmission/reception circuit to a transmission mode or a reception mode;
an agent advertisement transmission circuit (7) for reading, when receiving a notice saying that a registration request has been received from said mobile terminal, said agent advertisement from said agent advertisement memory, and is adapted to then transmit said agent advertisement to said mobile terminal via said wireless transmission/reception circuit and via said transmission/reception switching circuit; and
a terminal registration management circuit for notifying, when detecting receiving a registration request from said mobile terminal, said agent advertisement transmission circuit of the reception.

4. The system defined in Claim 1, wherein said agent information contains at least an IP address of said agent.

5. The system defined in Claim 4, wherein each base station comprises:
a memory (4) for storing said agent information set via said communication networks using a SNMP;
a cable network interface circuit (5) for outputting said agent information received, to said memory;
a transmission/reception circuit (1) as an interface circuit that is adapted to wirelessly connect said base station (BS') to said mobile terminal;
a transmission/reception switching circuit (2) for switching said transmission/reception circuit to a transmission mode or a reception mode;
a transmission circuit (7) for reading, when receiving a notice saying that a registration request has been received from a mobile terminal, said agent information from said memory, and then transmitting said information to said mobile terminal via said transmission/reception circuit (1) and via said transmission/reception switching circuit (2); and
a terminal registration management circuit (6) for notifying, when detecting receiving a registration request from said mobile terminal, said transmission circuit of the reception.

6. The system defined in Claim 1, wherein said mobile terminal comprises:
a transmission/reception circuit (8) as an interface circuit that is adapted to wirelessly connect said mobile terminal to said base stations;
a transmission/reception switching circuit (8) as a circuit that is adapted to switch said transmission/reception circuit (8) to a wireless transmission mode or a wireless reception mode;
a registration processing circuit (14) for transmitting, when receiving a notice saying that signals periodically transmitted from a base station have been detected, a registration request to said base station via said transmission/reception circuit (8) and via said transmission/reception switching circuit (9); and
a base station decision circuit (13) as a circuit that is adapted to detect signals periodically transmitted from a base station at which the mobile terminal is registered, said base station detection circuit (13) is adapted to judge, when said signals are not detected, that said mobile terminal has moved outside the radio cell of said base station and notifying, when signals periodically transmitted from another base station are detected, said registration processing circuit of the detection.

7. The system defined in Claim 6, wherein said mobile terminal comprises:
an agent connection processing circuit (12) for transmitting, when receiving a notice saying that reception of said agent information has been detected, a movement notice for said agent to a wireless base station via said transmission/reception circuit (8) and via said transmission/reception switching circuit (9); and
an agent advertisement reception circuit (10) being a circuit that detects reception of said agent information, said agent advertisement reception circuit notifying, when detecting reception of said agent information, said agent connection processing circuit (12) of the detection, and outputting a request for changing the network setting of a terminal (11) connected to said mobile terminal based on said agent information, to a network setting changing circuit (15) of said terminal.

8. A method of controlling a wireless LAN system, said wireless LAN system including a plurality of communication networks (NW) connected to each other; base stations for periodically sending signals within a wireless cell, at least one of said base stations being disposed in each of networks; a mobile terminal for communication with a base station in a cell; said mobile terminal (MT) transmitting, when receiving signals from another base station, a registration request to said base station which has sent said signals, and connecting, when receiving permission for registration from said base station, said mobile terminal to said base station, thus conducing communication; and agents (AG) each for distributing an agent advertisement on said communication networks and managing, the location of said mobile terminal based on a movement notice transmitted from said mobile terminal after said mobile terminal receives an agent information, each of agents (AG) being disposed in each of said communications networks; said method being ***characterized by*** the steps of:
storing said agent information into each of said base stations (BS'), based on said agent advertisement distributed on said communications network; and
when each of said base stations receives a registration request from said mobile terminal (MT) and permits registration of said mobile terminal, transmitting said agent information to be stored to said mobile terminal from each of said base stations, together with said permission for registration.

## Patentansprüche

1. Drahtloses LAN-System mit:
Einer Anzahl von Kommunikationsnetzwerken (NW₁, NW₂), die miteinander verbunden sind,
Basisstationen (BS') zum periodischen Übertragen von Signalen innerhalb einer drahtlosen Zelle, wobei zumindest eine der Basisstationen in jedem der Netzwerke (NW) angeordnet ist,
einem Mobilanschluss zum Kommunizieren mit einer Basisstation in einer Zelle,
wobei der Mobilanschluss (MT), wenn er die Signale neu von einer Basisstation in einer anderen Zelle empfängt, eine Registrierungsanforderung an die Basisstation (BS') sendet, die das Signal übertragen hat, und, wenn die Erlaubnis zur Registrierung von der Basisstation (BS') empfangen wird, den Mobilanschluss (MT) mit der Basisstation verbindet und somit Kommunikation durchführt und
Agenten (AG), jeweils zur Verteilung einer Agentenanzeige auf dem Kommunikationsnetzwerk und, nachdem der Mobilanschluss die Agenteninformation erhält, zum Verwalten der Position des Mobilanschlusses basierend auf Bewegungsinformation, die von dem Mobilanschluss (MT) übertragen wurde, wobei in jedem Kommunikationsnetzwerk einer der Agenten angeordnet ist,
**dadurch gekennzeichnet, dass** jede der Basisstationen ausgebildet ist, um eine Agenteninformation basierend auf der Agentenanzeige, die über das Kommunikationsnetzwerk übertragen wurde, zu speichern, zum Empfang einer Registrierungsanforderung von dem Mobilanschluss und, wenn eine Registrierung des Mobilanschlusses erlaubt wird, zum Übertragen der Agenteninformation an den Mobilanschluss zum Speichern, zusammen mit der Erlaubnis für die Registrierung.

2. System nach Anspruch 1, wobei die Agenteninformation die Agentenanzeige aufweist.

3. System nach Anspruch 2, wobei jede Basisstation aufweist:
Eine Agentenanzeige-Filterschaltung (3) zum Filtern von Signalen auf den Kommunikationsnetzwerken und dann zum Extrahieren der Agentenanzeige,
einen Agentenanzeigespeicher (4) zum Speichern einer Agentenanzeigeausgabe von der Agentenanzeige-Filterschaltung (3),
eine Kabelnetzwerk-Schnittstellenschaltung (5) zum Überwachen von Signalen, die auf den Kommunikationsnetzwerken verteilt werden, und zum Ausgeben der Signale auf dem Kommunikationsnetzwerk in die Agentenanzeige-Filterschaltung,
eine Sende/Empfangsschaltung (1) als Schnittstellenschaltung, die ausgebildet ist, um die Basisstation drahtlos mit dem Mobilanschluss zu verbinden,
eine Sende/Empfangs-Schaltschaltung (2) zum Wechseln der Sende/Empfangsschaltung in einen Sendemodus oder einen Empfangsmodus,
eine Agentenanzeige-Übertragungsschaitung (7) zum Lesen der Agentenanzeige aus dem Agentenanzeigespeicher, wenn eine Nachricht erhalten wird, die aussagt, dass eine Registrierungsanfrage von dem Mobilanschluss erhalten wurde, und die ausgebildet ist, dann die Agentenanzeige an den Mobilanschluss über die drahtlose Sende/Empfangsschaltung und über die Sende/Empfangs-Schaltschaltung zu übertragen, und
eine Anschlussregistrierungs-Verwaltungsschaltung zum Mitteilen des Empfangs an die Agentenanzeige-Übertragungsschaltung, wenn der Empfang einer Registrierungsanfrage von dem Mobilanschluss erfasst wird.

4. System nach Anspruch 1, wobei die Agenteninformation zumindest eine IP-Adresse des Agenten enthält.

5. System nach Anspruch 4, wobei jede Basisstation aufweist:
Einen Speicher (4) zum Speichern der Agenteninformation, die über die Kommunikationsnetzwerke eingestellt wurde, unter Verwendung eines SNMP,
eine Kabelnetzwerk-Schnittstellenschaltung (5) zum Ausgeben der empfangenen Agenteninformation an den Speicher,
eine Sende/Empfangsschaltung (1) als Schnittstellenschaltung, die ausgebildet ist, die Basisstationen (BS') mit dem Mobilanschluss drahtlos zu verbinden,
eine Sende/Empfangs-Schaltschaltung (2) zum Schalten der Sende/Empfangsschaltung in einen Sendemodus oder einen Empfangsmodus,
eine Sendeschaltung (7) zum Lesen der Agenteninformation aus dem Speicher, wenn eine Nachricht erhalten wird, die aussagt, dass eine Registrierungsanfrage von einem Mobilanschluss erhalten wurde, und die dann die Information an den Mobilanschluss über die Sende/Empfangsschaltung (1) und über die Sende/Empfangs-Schaltschaltung (2) übermittelt, und
eine Anschlussregistrierungs-Verwaltungsschaltung (6) zum Anzeigen des Empfangs an die Sendeschaltung, wenn eine Registrierungsanfrage von dem Mobilanschluss erfasst wurde.

6. System nach Anspruch 1, wobei der Mobilanschluss aufweist:
Eine Sende/Empfangsschaltung (8) als Schnittstellenschaltung, die ausgebildet ist, den Mobilanschluss mit den Basisstationen drahtlos zu verbinden,
eine Sende/Empfangs-Schaltschaltung (8) als Schaltung, die ausgebildet ist, die Sende/Empfangsschaltung (8) in einen drahtlosen Sendemodus oder einen drahtlosen Empfangsmodus zu schalten,
eine Registrierungsverarbeitungsschaltung (14) zum Übermitteln einer Registrierungsanfrage an die Basisstation über die Sende/Empfangsschaltung (8) und über die Sende/Empfangs-Schaltschaltung (9), wenn eine Mitteilung empfangen wird, die aussagt, dass periodisch von einer Basisstation gesendete Signale erfasst wurden, und
eine Basisstation-Entscheidungsschaltung (13) als Schaltung, die ausgebildet ist, um von einer Basisstation, an der der Mobilanschluss registriert ist, periodisch ausgesandte Signale zu erfassen, wobei die Basisstation-Erfassungsschaltung (13) ausgebildet ist, um festzustellen, wenn die Signale nicht erfasst werden, dass sich der Mobilanschluss außerhalb der Funkzelle der Basisstation bewegt hat, und zum Mitteilen der Erfassung an die Registrierungsverarbeitungsschaltung, wenn periodisch von einer anderen Basisstation übermittelte Signale erfasst werden.

7. System nach Anspruch 6, wobei der Mobilanschluss aufweist:
Eine Agentenverbindungs-Verarbeitungsschaltung (12) zum Übermitteln einer Bewegungsanzeige für die Agenten zu einer drahtlosen Basisstation über die Sende/ Empfangsschaltung (8) und über die Sende-Empfangs/Schaltschaltung (9), wenn eine Mitteilung erhalten wird, die aussagt, dass der Empfang der Agenteninformation erfasst wurde, und
eine Agentenanzeige-Empfangsschaltung (10), die eine Schaltung ist, die den Empfang der Agenteninformation erfasst, wobei die Agentenanzeige-Empfangsschaltung der Agentenverbindungs-Verarbeitungsschaltung (12) die Detektion anzeigt, wenn der Empfang der Agenteninformation erfasst wird, und eine Anforderung zum Ändern der Netzwerkeinstellungen eines Anschlusses (11), der mit dem Mobilanschluss verbunden ist, basierend auf der Agenteninformation, an eine Netzwerkeinstell-Änderungsschaltung (15) des Anschlusses, ausgibt.

8. Verfahren zum Steuern eines drahtlosen LAN-Systems, wobei das drahtlose LAN-System eine Anzahl von Kommunikationsnetzwerken (NW) aufweist, die miteinander verbunden sind, Basisstationen zum periodischen Senden von Signalen innerhalb einer drahtlosen Zelle, wobei zumindest eine der Basisstationen in jedem der Netzwerke angeordnet ist, einen Mobilanschluss zum Kommunizieren mit einer Basisstation in einer Zelle, wobei der Mobilanschluss (MT), wenn er Signale von einer anderen Basisstation erhält, eine Registrierungsanfrage an die Basisstation sendet, die die Signale gesendet hat, und zum Verbinden des Mobilanschlusses mit der Basisstation, wenn eine Erlaubnis zum Registrieren von der Basisstation erhalten wurde, wodurch Kommunikation durchgeführt wird, und Agenten (AG) für jeweils die Verteilung einer Agentenanzeige auf dem Kommunikationsnetzwerk und zum Verwalten der Position des Mobilanschlusses basierend auf einer Bewegungsanzeige, die von dem Mobilanschluss übertragen wurde, nachdem der Mobilanschluss eine Agenteninformation erhält, wobei jeder Agent (AG) in jedem der Kommunikationsnetzwerke angeordnet ist, wobei das Verfahren **gekennzeichnet durch** die Schritte:
Speichern der Agenteninformation in jeder der Basisstationen (BS') basierend auf der Agentenanzeige, die von dem Kommunikationsnetzwerk verteilt wurde, und
wenn jede der Basisstationen eine Registrierungsanfrage von dem Mobilanschluss (MT) erhält und die Registrierung des Mobilanschlusses erlaubt, Übertragen der Agenteninformation, die in dem Mobilanschluss zu speichern ist, von jeder der Basisstationen zusammen mit der Erlaubnis zur Registrierung.

## Revendications

1. Système de réseau local sans fil comprenant :
une pluralité de réseaux de communication (NW₁, NW₂) reliés les uns aux autres ;
des stations de base (BS') pour transmettre périodiquement des signaux à l'intérieur d'une cellule sans fil, au moins une desdites stations de base étant disposée dans chacun desdits réseaux (NW) ;
un terminal mobile pour communication avec une station de base dans une cellule ;
ledit terminal mobile (MT) transmettant, quand il reçoit nouvellement lesdits signaux d'une station de base dans une autre cellule, une demande d'enregistrement à la station de base (BS') qui a transmis ledit signal et connectant, quand il reçoit la permission pour l'enregistrement de ladite station de base (BS'), ledit terminal mobile (MT) à ladite station de base, établissant ainsi la communication ; et
des agents (AG) chacun pour distribuer une publicité d'agent sur lesdits réseaux de communication et gérer, après que ledit terminal mobile a reçu une information d'agent, la position dudit terminal mobile basé sur l'information de mouvement transmise à partir dudit terminal mobile (MT), chacun des agents étant disposé dans chacun desdits réseaux de communication ;
**caractérisé en ce que**
chacune desdites stations de base est adaptée pour stocker une information d'agent basée sur ladite publicité d'agent distribuée sur ledit réseau de communication, recevoir une demande d'enregistrement provenant dudit terminal mobile, et transmettre, quand l'enregistrement dudit terminal mobile est autorisé, ladite information d'agent audit terminal mobile pour qu'elle soit stockée, conjointement avec ladite permission d'enregistrement.

2. Système selon la revendication 1, dans lequel ladite information d'agent comprend ladite publicité d'agent.

3. Système selon la revendication 2, dans lequel chaque station de base comprend :
un circuit de filtrage de publicité d'agent (3) pour filtrer les signaux sur lesdits réseaux de communication puis extraire ladite publicité d'agent ;
une mémoire de publicité d'agent (4) pour stocker une sortie de publicité d'agent provenant dudit circuit de filtrage de publicité d'agent (3) ;
un circuit d'interface de réseau câblé (5) pour contrôler des signaux distribués sur lesdits réseaux de communication et envoyer en sortie lesdits signaux sur lesdits réseaux de communication dans ledit circuit de filtrage de publicité d'agent ;
un circuit d'émission/réception (1) comme un circuit d'interface qui est adapté pour connecter sans fil ladite station de base audit terminal mobile ;
un circuit de commutation d'émission/réception (2) pour changer ledit circuit d'émission/réception à un mode d'émission ou un mode de réception ;
un circuit de transmission de publicité d'agent (7) pour lire, quand il reçoit un avis disant qu'une demande d'enregistrement a été reçue dudit terminal mobile, ladite publicité d'agent provenant de ladite mémoire de publicité d'agent, et est adapté pour transmettre alors ladite publicité d'agent audit terminal mobile via ledit circuit sans fil d'émission/réception et via ledit circuit de commutation d'émission/réception ; et
un circuit de gestion d'enregistrement de terminal pour notifier, quand il détecte la réception d'une demande d'enregistrement provenant dudit terminal mobile, ledit circuit de transmission de publicité d'agent de la réception.

4. Système selon la revendication 1, dans lequel ladite information d'agent contient au moins une adresse IP dudit agent.

5. Système selon la revendication 4, dans lequel chaque station de base comprend :
une mémoire (4) pour stocker ledit ensemble d'information d'agent via lesdits réseaux de communication à l'aide d'un SNMP ;
un circuit d'interface réseau câblé (5) pour envoyer en sortie ladite information d'agent reçue, à ladite mémoire ;
un circuit d'émission/réception (1) comme un circuit d'interface qui est adapté pour connecter sans fil ladite station de base (BS') audit terminal mobile ;
un circuit de commutation d'émission/réception (2) pour commuter ledit circuit d'émission/réception à un mode d'émission ou un mode de réception ;
un circuit de transmission (7) pour lire, quand il reçoit un avis disant qu'une demande d'enregistrement a été reçue provenant d'un terminal mobile, ladite information d'agent provenant de ladite mémoire, puis transmettre ladite information audit terminal mobile via ledit circuit d'émission/réception (1) et via ledit circuit de commutation d'émission/réception (2) ; et
un circuit de gestion d'enregistrement de terminal (6) pour notifier, quand il détecte la réception d'une demande d'enregistrement provenant dudit terminal mobile, ledit circuit de transmission de la réception.

6. Système selon la revendication 1, dans lequel ledit terminal mobile comprend :
un circuit d'émission/réception (8) comme un circuit d'interface qui est adapté pour connecter sans fil ledit terminal mobile auxdites stations de base ;
un circuit de commutation d'émission/réception (8) comme un circuit qui est adapté pour commuter ledit circuit d'émission/réception (8) à un mode d'émission sans fil ou un mode de réception sans fil ;
un circuit de traitement des enregistrements (14) pour transmettre, quand il reçoit un avis disant que des signaux émis périodiquement d'une station de base ont été détectés, une demande d'enregistrement à ladite station de base via ledit circuit d'émission/réception (8) et via ledit circuit de commutation d'émission/réception (9) ; et
un circuit de décision de station de base (13) comme un circuit qui est adapté pour détecter des signaux émis périodiquement d'une station de base dans laquelle le terminal mobile est enregistré, ledit circuit de décision de station de base (13) est adapté pour juger, quand lesdits signaux ne sont pas détectés, que ledit terminal mobile s'est déplacé hors de la cellule radio de ladite station de base et notifier, quand les signaux émis périodiquement d'une autre station de base sont détectés, ledit circuit de traitement des enregistrements de la détection.

7. Système selon la revendication 6, dans lequel ledit terminal mobile comprend :
un circuit de traitement de connexion d'agent (12) pour émettre, quand il reçoit un avis disant que la réception de ladite information d'agent a été détectée, un avis de mouvement pour ledit agent à une station de base sans fil via ledit circuit d'émission/réception (8) et via ledit circuit de commutation d'émission/réception (9) ; et
un circuit de réception de publicité d'agent (10) étant un circuit qui détecte la réception de ladite information d'agent, ledit circuit de notification de réception de publicité d'agent notifiant, quand il détecte la réception de ladite information d'agent, ledit circuit de traitement de connexion d'agent (12) de la détection, et envoyant en sortie une demande de changer le paramétrage réseau d'un terminal (11) connecté audit terminal mobile sur la base de ladite information d'agent, à un circuit de changement de paramétrage réseau (15) dudit terminal.

8. Procédé pour contrôler un système de réseau local sans fil, ledit système de réseau local sans fil comprenant une pluralité de réseaux de communication (NW) reliés les uns aux autres ; des stations de base pour émettre périodiquement des signaux à l'intérieur d'une cellule sans fil, au moins une desdites stations de base étant disposée dans chacun des réseaux ; un terminal mobile pour communication avec une station de base dans une cellule ; ledit terminal mobile (MT) émettant, quand il reçoit des signaux provenant d'une autre station de base, une demande d'enregistrement à ladite station de base qui a envoyé lesdits signaux, et connectant, quand il reçoit la permission d'enregistrement provenant de ladite station de base, ledit terminal mobile à ladite station de base, établissant ainsi la communication ; et des agents (AG) chacun pour distribuer une publicité d'agent sur lesdits réseaux de communication et gérer, la position dudit terminal mobile basée sur un avis de mouvement transmis dudit terminal mobile après que ledit terminal mobile a reçu une information d'agent, chacun des agents (AG) étant disposé dans chacun desdits réseaux communication ; ledit procédé étant **caractérisé par** les étapes consistant à :
stocker ladite information d'agent dans chacune desdites stations de base (BS'), sur la base de ladite publicité d'agent distribuée sur ledit réseau de communication ; et
quand chacune desdites stations de base reçoit une demande d'enregistrement provenant dudit terminal mobile (MT) et permet l'enregistrement dudit terminal mobile, transmettre ladite information d'agent à stocker audit terminal mobile à partir de chacune desdites stations de base, conjointement avec ladite permission d'enregistrement.
